# EUROPEAN PATENT SPECIFICATION

(11) **EP 2 709 499 B1**
(45) Date of publication and mention of the grant of the patent: **18.03.2015**
(21) Application number: 12714024.2
(22) Date of filing: 17.04.2012
(51) Int. Cl.: A47J 31/06, A47J 31/36

(54) **INFUSION ASSEMBLY FOR CAPSULES**
INFUSIONSANORDNUNG FÜR KAPSELN
ENSEMBLE D'INFUSION POUR CAPSULES

(30) Priority: 18.05.2011 IT MI20110876
(43) Date of publication of application: 26.03.2014
(73) Proprietor: Swiss Caffe Asia Ltd, Hong Kong (HK)
(72) Inventor: AARDENBURG, Cornelius J. M., CH-6900 Lugano (CH); VALSECCHI, Massimiliano, I-20824 Lazzate (IT)
(74) Representative: Modiano, Micaela Nadia
(86) International application number: PCT/EP2012/057014
(87) International publication number: WO 2012/156167

(56) References cited:
- EP-A1- 0 468 080
- EP-A1- 1 774 879
- WO-A1-2004/060121

## Description

The present invention relates to an infusion assembly for capsules and/or pods for obtaining infused beverages and the like.

In the catering field and especially in the field of beverages obtained by infusion of flavored powders, conventional machines for dispensing infused beverages, such as for example machines dedicated to the making of espresso coffee, usually comprise an infusion assembly which defines internally an infusion chamber in which a capsule or pod is arranged which contains therein the powder through which the water is made to pass in order to obtain the infusion.

More precisely, the infusion chamber is delimited, at least from one of its sides, by an element that can be removed when required so as to allow the ejection and/or replacement of the capsule or pod.

Such infusion assemblies of the known type are not devoid of drawbacks, including the fact that they are designed for a single specific type of capsule or pod, i. e., to be more precise, for a single supplier of capsules and/or pods for infusion.

In fact, a great number of companies specialized in the production of capsules and/or pods for infusions are present on the market and each capsule or pod may be inserted in an infusion assembly whose inner geometry matches up substantially with the outer geometry of the capsule and/or pod.

Moreover, another drawback of conventional infusion devices consists in that they force the operator to perform two operations in order to change capsule or pod: the first one consists in removing the already filtered capsule or pod and the second one consists in replacing the capsule or pod with a new one.

Moreover, it should be noted that while the replacement with a new capsule or pod can be a substantially simple operation, since it consists in arranging the new capsule or pod in an adapted insertion channel or seat, the removal of the already filtered capsule or pod may not be a simple and quick operation.

In fact, the infusion chambers of infusion assemblies of the known type, by defining a closed space, are difficult to reach for the operator.

In order to eliminate this drawback, in recent years ejection devices have been perfected which are adapted to remove the capsule or pod from the infusion chamber in a manner which is automatic but nevertheless complicated. Document EP-A-1774879 discloses an infusion assembly according to the preamble of independent claim 1.

The aim of the present invention is to provide an infusion assembly, particularly for capsules and/or pods for obtaining infused beverages and the like, that can be used with capsules and/or pods of different shapes.

Within this aim, an object of the present invention is to provide an infusion assembly capable of giving the greatest assurances of reliability, quality, repeatability and safety in use.

Another object of the invention is to provide an infusion assembly that allows a simple, quick and safe ejection of the pod or capsule from the infusion chamber in a single operation, and replacement with a new one.

This aim and these and other objects, which wil become better apparent hereinafter, are achieved by an infusion assembly according to independent claim 1.

Further characteristics and advantages will become better apparent from the description of two preferred but not exclusive embodiments of an infusion assembly for capsules and/or pods for obtaining infused beverages and the like, illustrated by way of non-limiting example in the accompanying drawings wherein:
Figure 1 is a perspective view of a first embodiment of an infusion assembly, particularly for capsules and/or pods for obtaining infused beverages and the like, according to the invention, in its operating configuration;
Figure 2 is a bottom plan view of the infusion assembly shown in Figure 1;
Figure 3 is a sectional view, taken along the sectional line III-III, of the infusion assembly shown in Figure 2;
Figure 4 is a sectional view, taken along the sectional line IV-IV, of the infusion assembly shown in Figure 3;
Figure 5 is a rear elevation view of the infusion assembly shown in Figure 1;
Figure 6 is a sectional view, taken along the sectional line VI-VI, of the infusion assembly shown in Figure 5;
Figure 7 is a sectional view, taken along the sectional line VII-VII, of the infusion assembly shown in Figure 5;
Figure 8 is a perspective view of the infusion assembly shown in Figure 1 during a first opening step thereof;
Figure 9 is a perspective view of the infusion assembly shown in Figure 1 during a second opening step thereof;
Figure 10 is a top plan view of the infusion assembly shown in Figure 9;
Figure 11 is a sectional view, taken along the sectional line XI-XI, of the infusion assembly shown in Figure 10;
Figure 12 is a sectional view, taken along the sectional line XII-XII, of the infusion assembly shown in Figure 10;
Figure 13 is a perspective view of the infusion assembly shown in Figure 1 during the ejection of the capsule;
Figure 14 is a sectional view, taken along the sectional line XIV-XIV, of the infusion assembly shown in Figure 13;
Figure 15 is a sectional view, taken along the sectional line XV-XV, of the infusion assembly shown in Figure 14;
Figure 16 is a sectional view, taken along the sectional line XVI-XVI, of the infusion assembly shown in Figure 14;
Figure 17 is a perspective view of the infusion assembly shown in Figure 1, ready to accommodate a new capsule;
Figure 18 is a sectional view, taken along the sectional line XVIII-XVIII, of the infusion assembly shown in Figure 17;
Figure 19 is a sectional view, taken along the sectional line XIX-XIX, of the infusion assembly shown in Figure 18;
Figure 20 is a sectional view, taken along the sectional line XX-XX, of the infusion assembly shown in Figure 18;
Figure 21 is a perspective view of the infusion assembly shown in Figure 1 during the insertion of a new capsule;
Figure 22 is a sectional view, taken along the sectional line XXII-XXII, of the infusion assembly shown in Figure 21;
Figure 23 is a sectional view, taken along the sectional line XXIII-XXIII, of the infusion assembly shown in Figure 22;
Figure 24 is a sectional view, taken along the sectional line XXIV-XXIV, of the infusion assembly shown in Figure 22;
Figure 25 is a perspective view of the infusion assembly shown in Figure 1 during its closure;
Figure 26 is a sectional view, taken along the sectional line XXVI-XXVI, of the infusion assembly shown in Figure 25;
Figure 27 is a sectional view, taken along the sectional line XXVII-XXVII, of the infusion assembly shown in Figure 26;
Figure 28 is a sectional view, taken along the sectional line XXVIII-XXVIII, of the infusion assembly shown in Figure 26;
Figure 29 is a perspective view of a second embodiment of an infusion assembly, particularly for capsules and/or pods for obtaining infused beverages and the like, according to the invention, in its operating configuration;
Figure 30 is a sectional view, taken along the sectional line XXX-XXX, of the infusion assembly shown in Figure 29;
Figure 31 is a sectional view, taken along the sectional line XXXI-XXXI, of the infusion assembly shown in Figure 30;
Figure 32 is a perspective view of the infusion assembly shown in Figure 29 during the ejection of the pod;
Figure 33 is a sectional view, taken along the sectional line XXXIII-XXXIII, of the infusion assembly shown in Figure 32;
Figure 34 is a sectional view, taken along the sectional line XXXIV-XXXIV, of the infusion assembly shown in Figure 33;
Figure 35 is a perspective view of the infusion assembly shown in Figure 29 during the second opening step;
Figure 36 is a sectional view, taken along the sectional line XXXVI-XXXVI, of the infusion assembly shown in Figure 35;
Figure 37 is a sectional view, taken along the sectional line XXXVII-XXXVII, of the infusion assembly shown in Figure 36;
Figure 38 is a perspective view of a first variation of the infusion assembly shown in Figure 1 and of a capsule;
Figure 39 is a top perspective view and a bottom perspective view, respectively, of the capsule to be used in the infusion chamber shown in Figure 38;
Figure 40 is a perspective view of details of the infusion assembly shown in Figure 38;
Figures 41 and 42 are two perspective views of details of a second capsule variation of the infusion assembly shown in Figure 1;
Figures 43 and 44 are two perspective views of details of a third capsule variation of the infusion assembly shown in Figure 1;
Figures 45 and 46 are two perspective views of details of a fourth capsule variation of the infusion assembly shown in Figure 1.

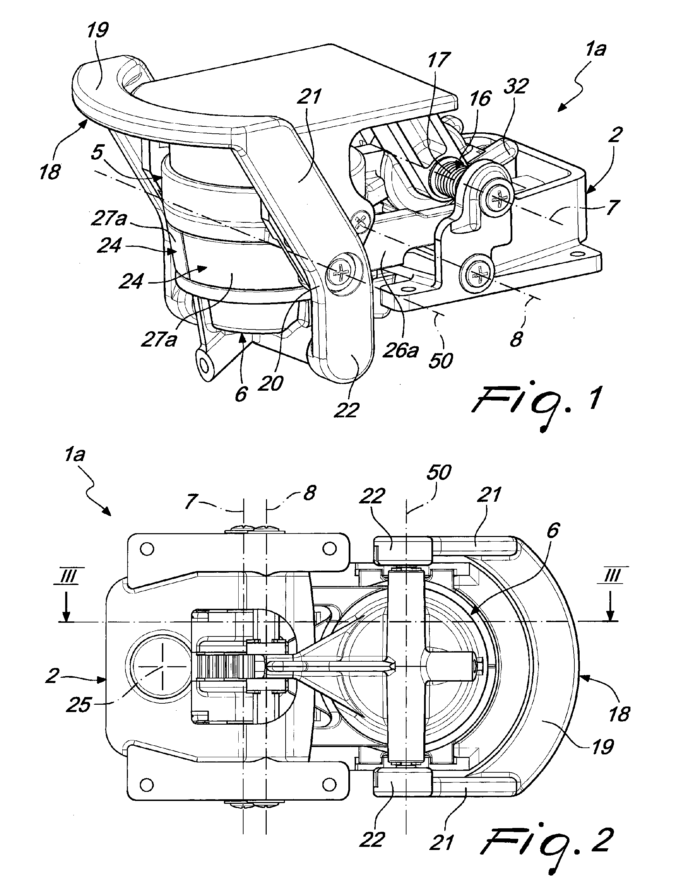

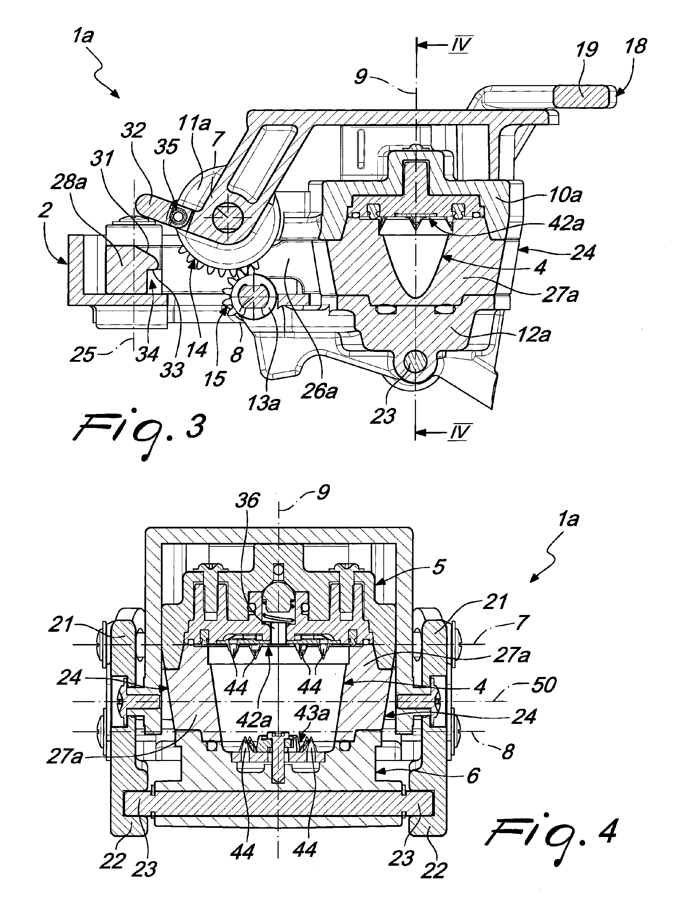

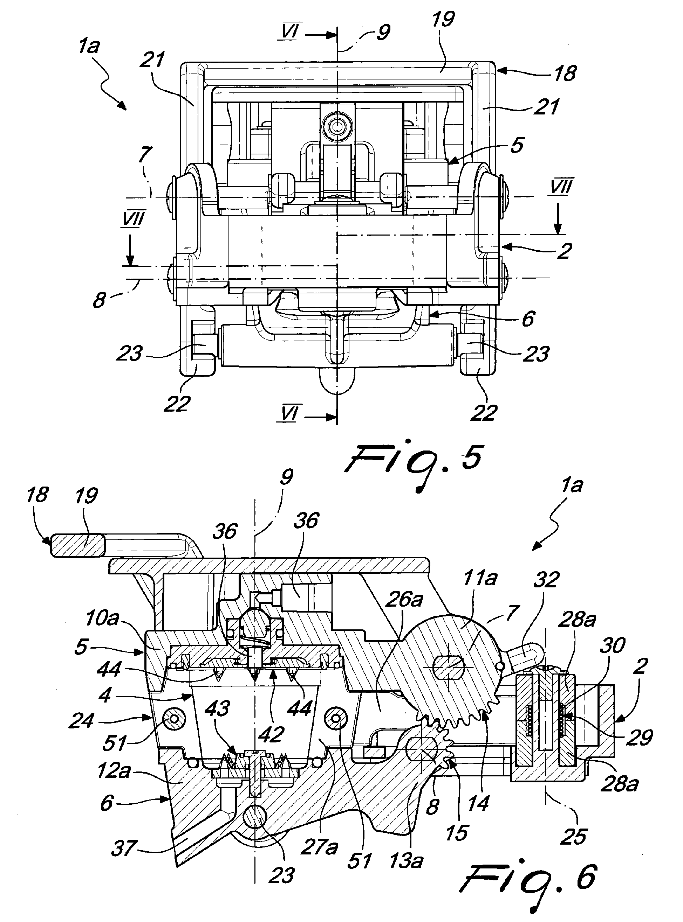

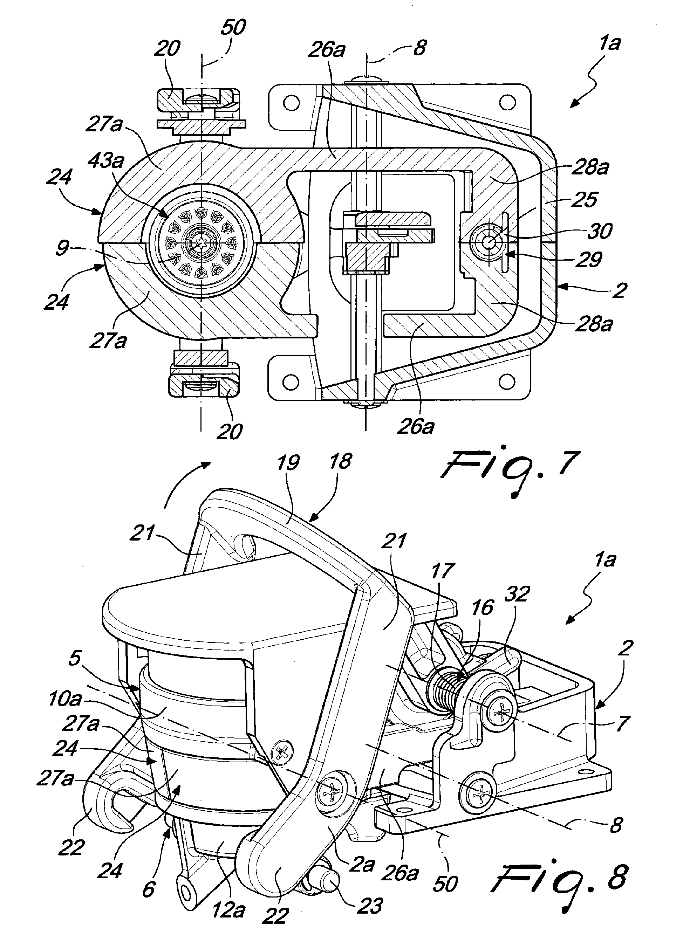

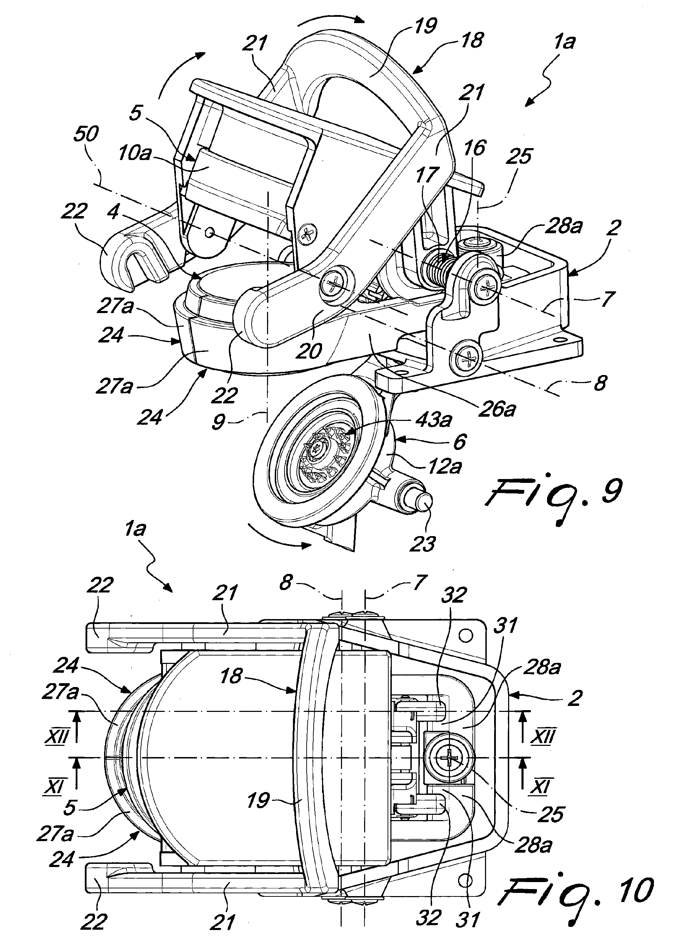

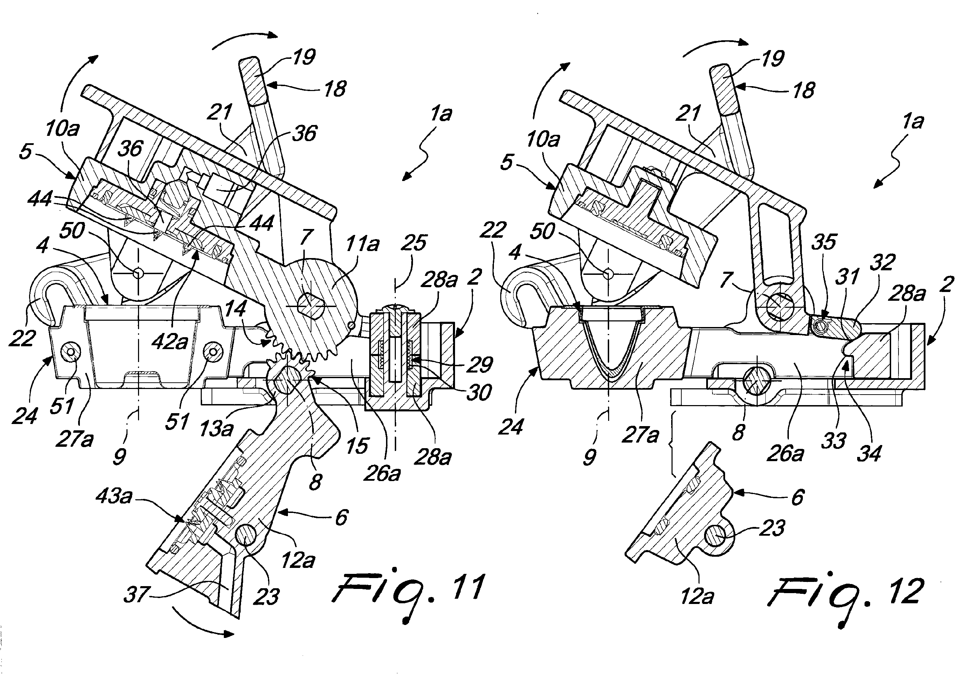

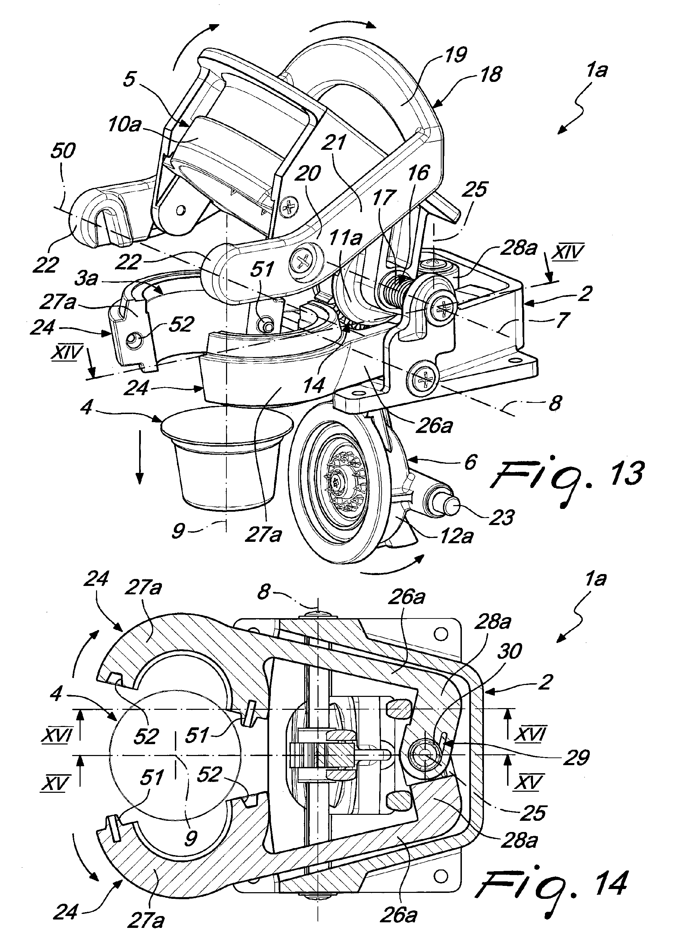

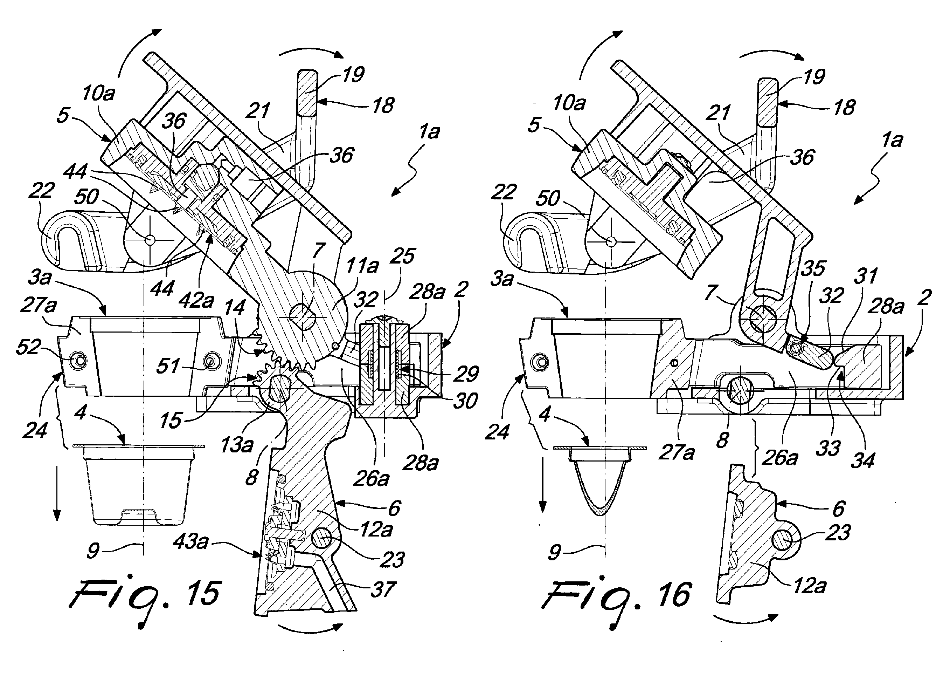

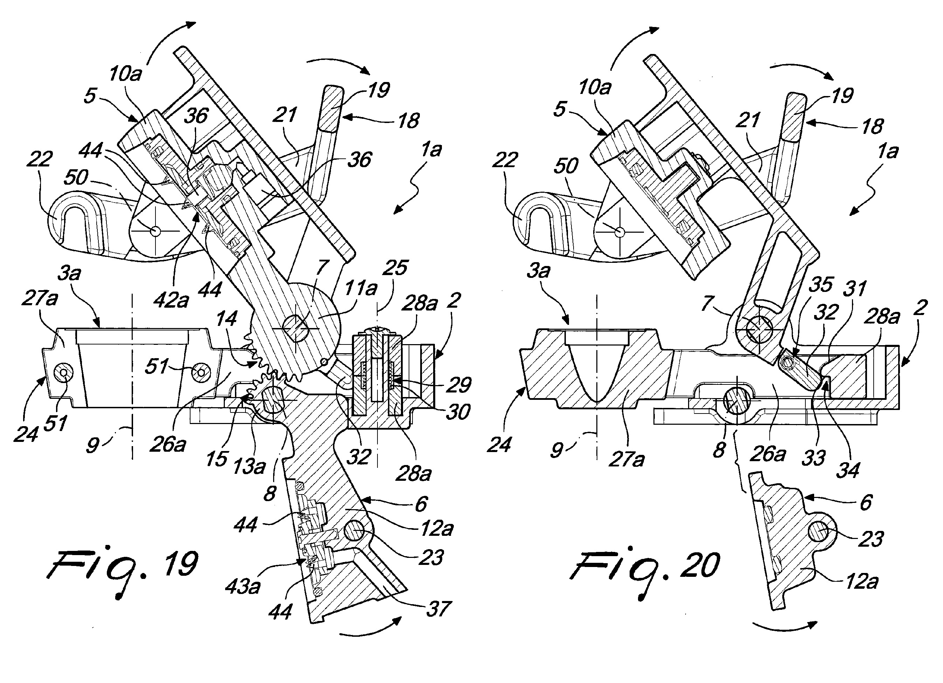

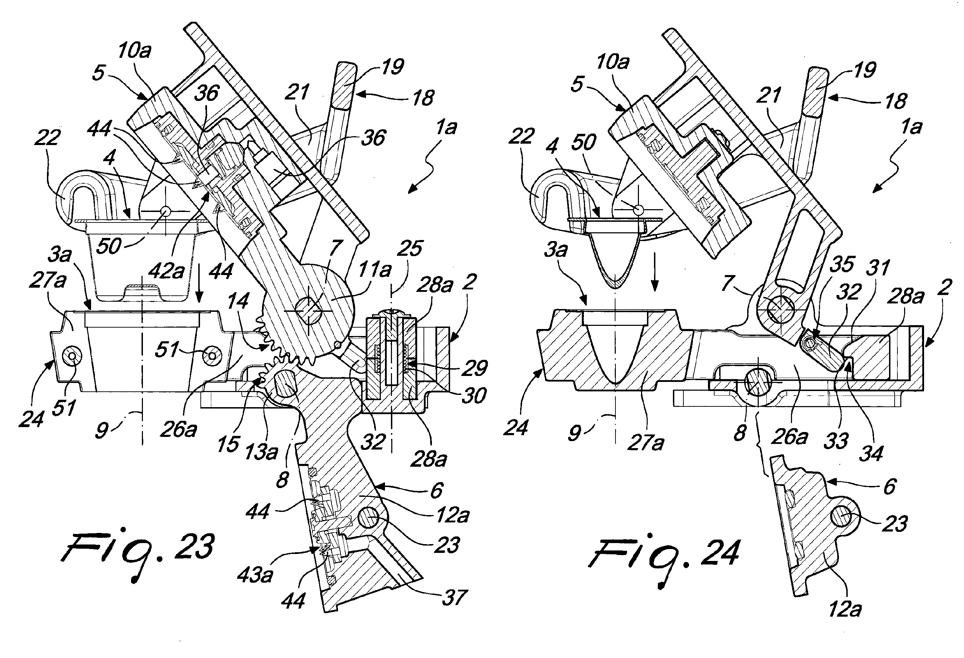

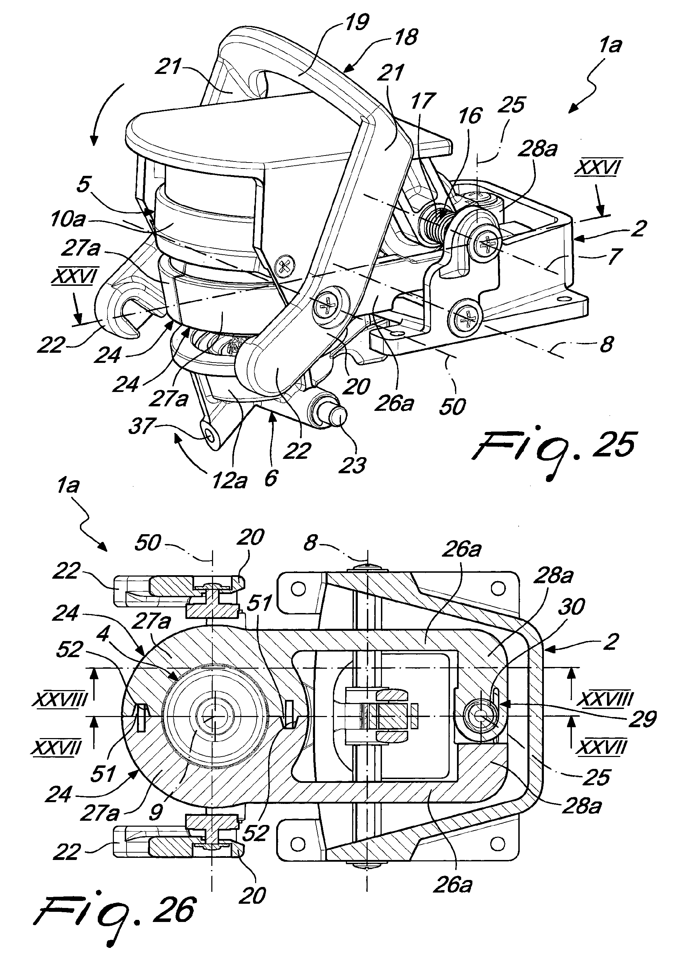

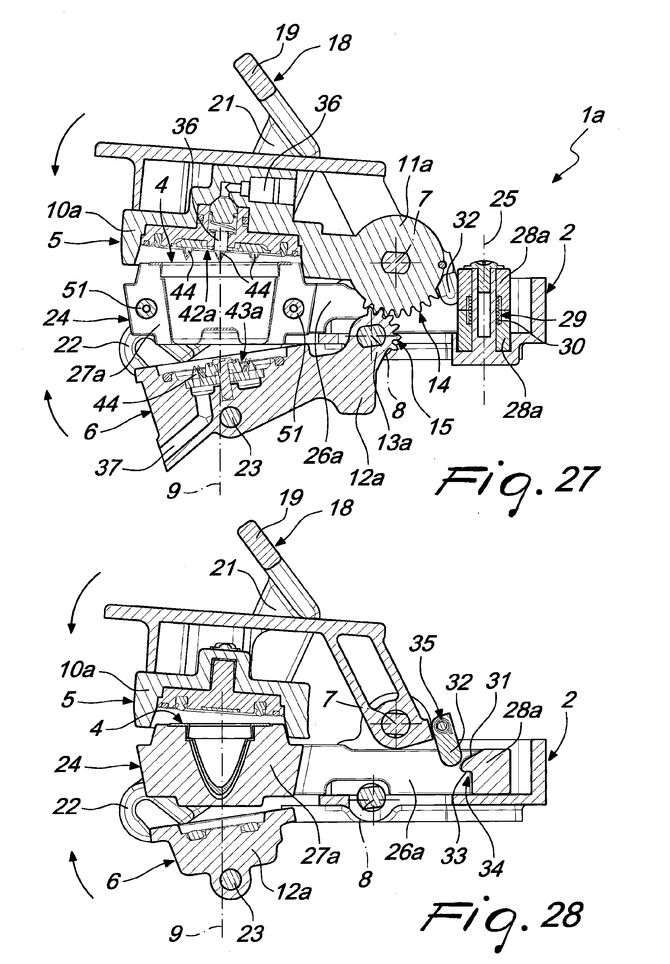

With reference to Figures 1 to 28, the infusion assembly, particularly for capsules for obtaining infused beverages and the like, generally designated in its first proposed embodiment by the reference numeral 1a, comprises a main body 2, which can be associated with a coffee machine or the like, not shown, and supports at least one element adapted to define an infusion chamber 3a having a substantially cylindrical shape and adapted to accommodate a capsule 4 for infusions.

More precisely, the infusion chamber 3a is delimited at least upward and at least downward, respectively, by an upper element 5 and by a lower element 6 which are pivoted to the main body 2, respectively, about two pivoting axes 7 and 8 which are substantially parallel to each other and substantially at right angles to the axis of revolution 9 of the infusion chamber 3a.

Advantageously, the upper element 5 and the lower element 6 are kinematically connected to each other for their synchronized motion between a closed position, in which the upper element 5 and the lower element 6 delimit the infusion chamber 3a, and an open position, in which the upper element 5 and the lower element 6 are spaced from the infusion chamber 3a in order to discharge the capsule 4 from the infusion chamber 3a.

More specifically, the upper element 5 is provided by a first lever 10a, which is substantially disc-shaped with a first tab 11a pivoted to the main body 2 about the first pivoting axis 7, and the lower element 6 is provided by a second lever 12a, which is substantially disc-shaped with a second tab 13a which is pivoted to the main body 2 about the second pivoting axis 8, which is parallel to the first pivoting axis 7.

The motion previously mentioned is provided by means of two toothed profiles 14 and 15, which are defined directly by the tabs 11 a and 13a and mesh with each other about the pivoting axes 7 and 8, with a gear ratio that can vary according to the desired effect.

In this manner, the upper element 5 and the lower element 6 can move from the open position to the closed position and vice versa, respectively, in contrast with, and by way of the action of, first elastic means 16 interposed between the main body 2 and at least one between the upper element 5 and the lower element 6.

More precisely, the first elastic means 16 can consist of two torsion springs 17 which are keyed, one for each side, on the pivot for articulation between the upper element 5 and the main body 2 and are adapted to keep the upper element 5 spaced from the infusion chamber 3a in order to allow the operator to insert the capsule 4.

In order to ensure mutual locking between the upper element 5 and the lower element 6 in contrast with the action of the first elastic means 16 during the infusion step, at least one substantially U-shaped handle 18 is provided, which is associated with the upper element 5 and can be engaged with the lower element 6.

As shown in the figures, the curved portion 19 of the handle 18 protrudes from the upper element 5 and the central portions 20 of the arms 21 of the handle 18 are pivoted to the upper element 5 about the pivoting axis 50.

In the closed position, the end portions 22 of the arms 21 can be engaged with corresponding retention pins 23 defined by the lower element 6 in order to lock the upper element 5 and the lower element 6 in the closed position.

Advantageously, in order to provide automatic ejection of the capsule 4 as will be described in greater detail hereinafter, the infusion chamber 3a is delimited laterally by a pair of jaw elements 24, which can be mutually engaged and are pivoted to the main body 2 about a third pivoting axis 25, which is substantially perpendicular to the two pivoting axes 7 and 8 for the disengagement of the two jaw elements 24, with consequent discharge of the capsule 4 by gravity from the infusion chamber 3a.

Conveniently, on the mutual engagement surface of the two jaw elements 24 centering pins 51 can be provided, which can be inserted in corresponding centering holes 52.

More precisely, the two jaw elements 24 are kinematically connected to at least one between the upper element 5 and the lower element 6 for their synchronized motion with the upper element 5 and the lower element 6 during transition from the closed position to the open position.

More specifically, the jaw elements 24 are provided by two third levers 26a, each having a substantially C-shaped portion 27a such as to surround completely the capsule 4, together with the other substantially C-shaped portion 27a of the other third lever 26a.

Moreover, each one of the third levers 26a comprises an end portion 28a which is spaced from the respective substantially C-shaped portion 27a, which is pivoted to the main body 2 about the third pivoting axis 25 and is kinematically connected to at least one between the upper element 5 and the lower element 6.

In this manner, as shown in the figures, the two jaw elements 24 can move from an engagement position, which corresponds to the fully closed position or open position of the upper element 5 and of the lower element 6, to a disengagement position, which corresponds to a position which is intermediate between the closed position and the open position of the upper element 5 and of the lower element 6, and vice versa.

This motion occurs, respectively, in contrast with, and by way of the action of, second elastic means 29 interposed between the main body 2 and the two jaw elements 24.

More precisely, the second elastic means 29 may consist of a caliper spring 30, which is keyed on the pivot for pivoting between the two jaw elements 24 and the main body 2 and is adapted to keep the two jaw elements 24 fastened to each other so as to define the infusion chamber 3a and allow the operator to insert the capsule 4.

Advantageously, the movement of the two jaw elements 24 is allowed by their coupling to the upper element 5.

More precisely, each end portion 28 of the two jaw elements 24 comprises an inclined plane 31, which is spaced from the third pivoting axis 25 and can be engaged by sliding, during the transition between the engagement position and the disengagement position, with a respective cam element 32, which is associated with the upper element 5 in order to rotate each jaw element 24 about the third pivoting axis 25.

In this manner, as a consequence of the mutual spacing of the upper element 5 and of the lower element 6, the jaw elements 24 open and let the capsule 4 fall by gravity.

In order to allow the elastic return of the two jaw elements 24 to their engagement position while still keeping the upper element 5 and the lower element 6 mutually spaced, so as to allow the operator to arrange a new capsule 4, each inclined plane 31 ends in a downward region with a step 33, which is adapted to define a cavity 34 such as to accommodate the respective cam element 32.

Conveniently, each cam element 32 is associated with the upper element 5 by means of an elastically flexible support 35, which is such as to allow the cam element 32 to move beyond the respective step 33 in the final part of the transition from the open position to the closed position.

Finally, the first lever 10a, which defines the upper element 5, defines internally at least one infusion channel 36, which is connected to the infusion chamber 3a when the upper element 5 is arranged in the closed position.

The infusion channel 36 is per se known and therefore is not described in detail.

Likewise, the second lever 12a, which defines the lower element 6, defines internally at least one discharge channel 37, which is connected to the infusion chamber 3a when the lower element 6 is arranged in the closed position.

The discharge channel 37 is per se known and therefore is not described in detail.

As already mentioned, in this embodiment the infusion chamber 3a is shaped geometrically in order to accommodate at least one capsule 4 for infusions.

More precisely, for a capsule 4 having a frustum-like geometry the jaw elements 24, once they have been mutually associated, can define directly an infusion chamber 3a with a geometry which is adapted to accommodate the capsule 4 without play.

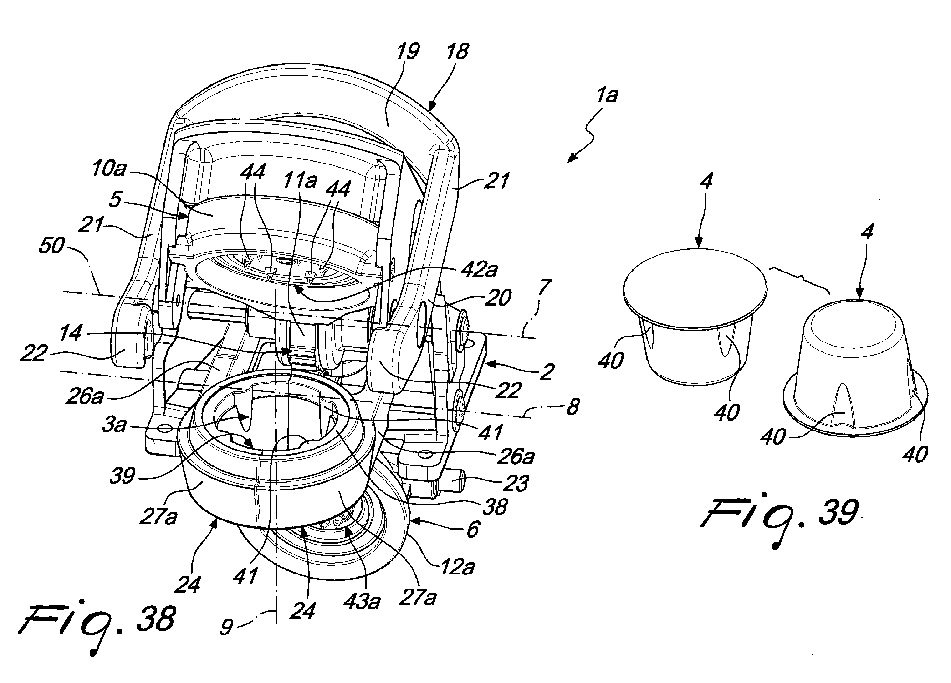

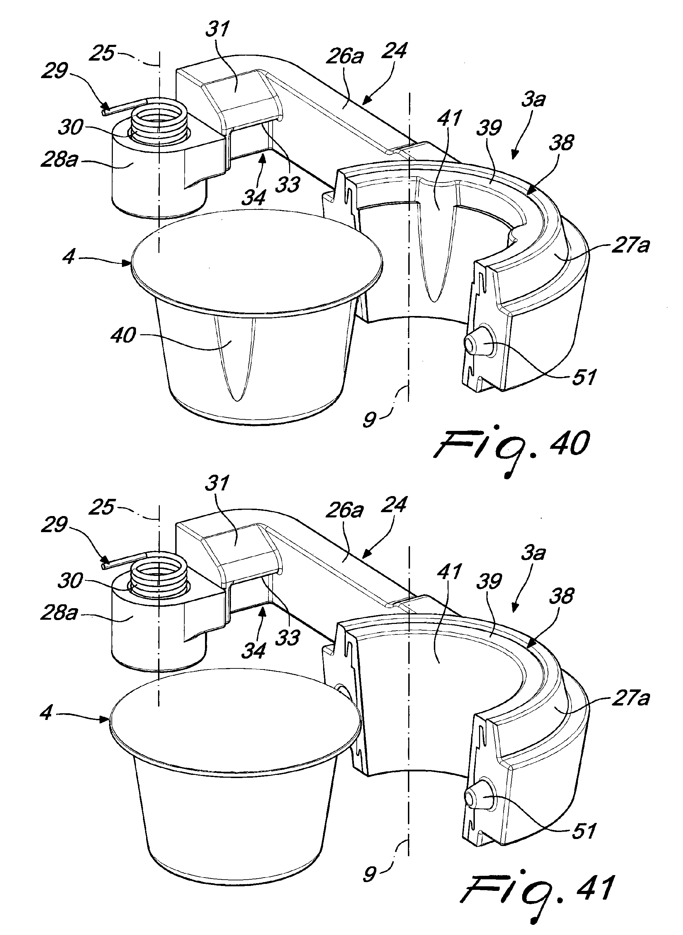

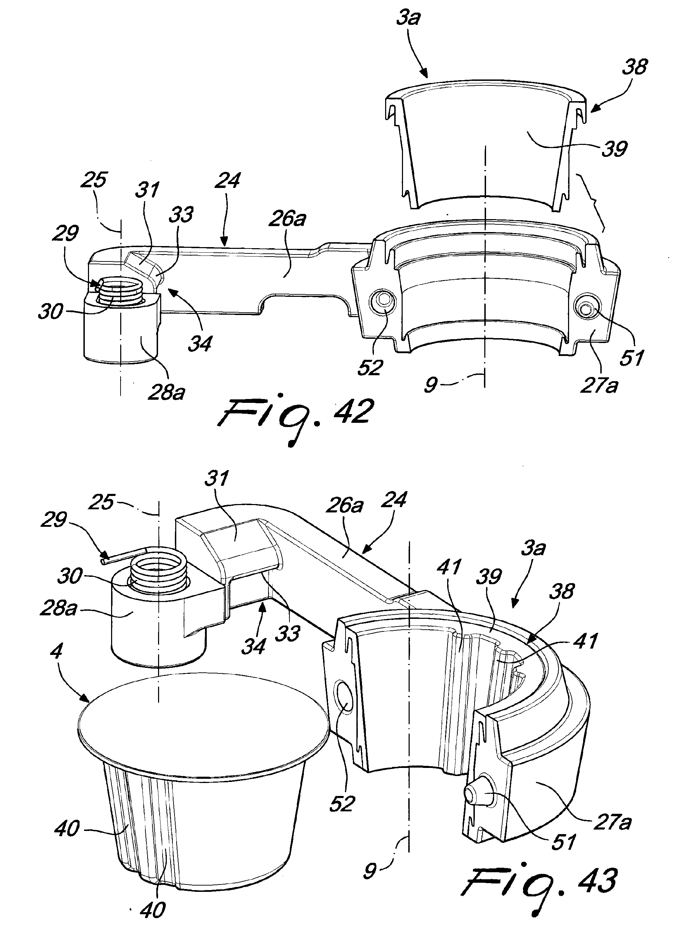

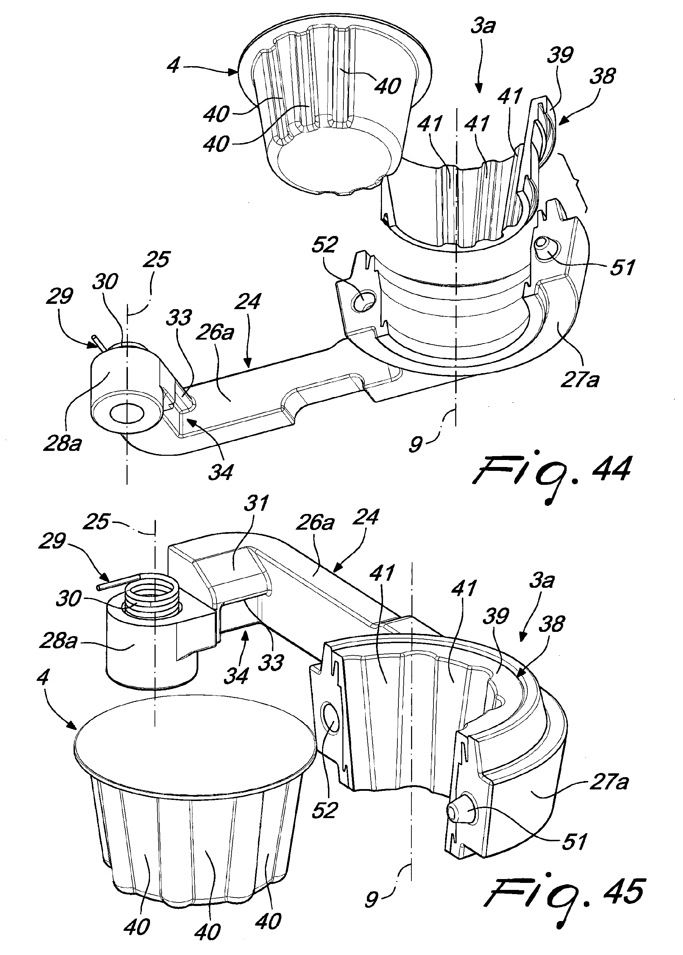

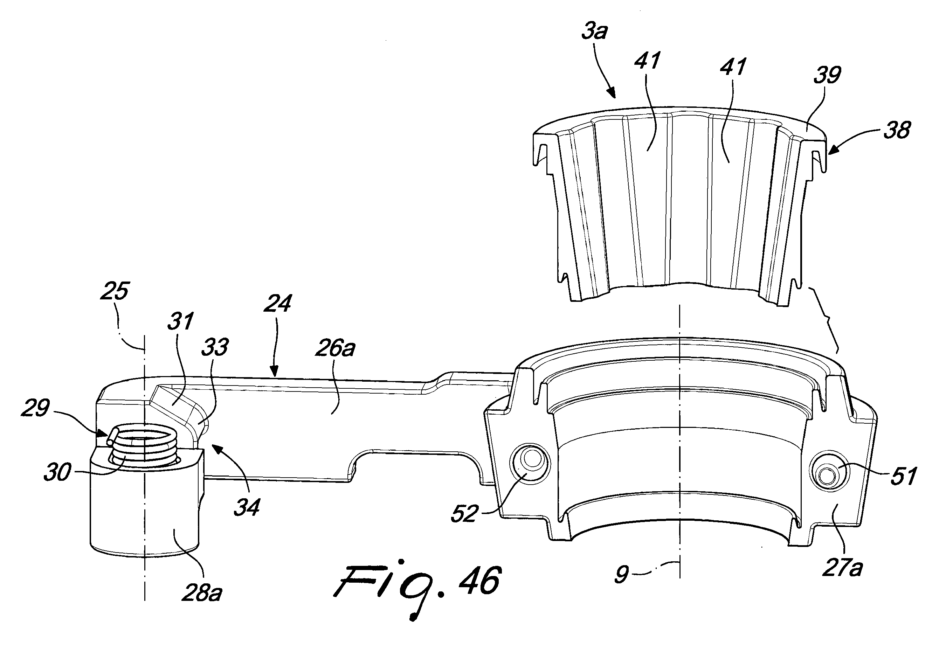

According to the invention, as shown in Figures 38 to 46, in order to make the infusion assembly 1a usable with a plurality of capsules 4 of different shape, for example supplied by different suppliers, means 38 for adapting the capsule 4 in the infusion chamber 3a may be provided in the infusion chamber 3a.

In the variations shown in Figures 38 to 46, the adapter means 38 comprise a circular cylindrical body 39, which can be form-fit engaged in a seat defined between the substantially C-shaped portions 27a of the jaw elements 24.

More precisely, the body 39 is of the hollow through type and defines internally the infusion chamber 3a.

In this manner, the user, depending on the shape of the capsule 4, selects the body 39 that is suitable to adapt the infusion assembly 1a to the capsule 4.

Moreover, both on the capsule 4 and on the body 39, respectively, a plurality of grooves 40 and ribs 41 can be provided, which mutually match up and are adapted to ensure a correct arrangement by form-fit engagement of the capsule 4 in the infusion chamber 3a. Moreover, this refinement prevents the introduction of capsules 4 that are different from the ones provided for by the body 39.

If the capsule 4 is of the perforation type, both on the upper element 5 and on the lower element 6 perforated plates 42a and 43a can be provided, which are provided with perforating spikes 44 which are adapted to perforate the capsule 4 in the transition from the open position to the closed position.

Since the perforated plates 42a, 43a and the perforating spikes 44 are per se known to the person skilled in the art, they will not be described in detail.

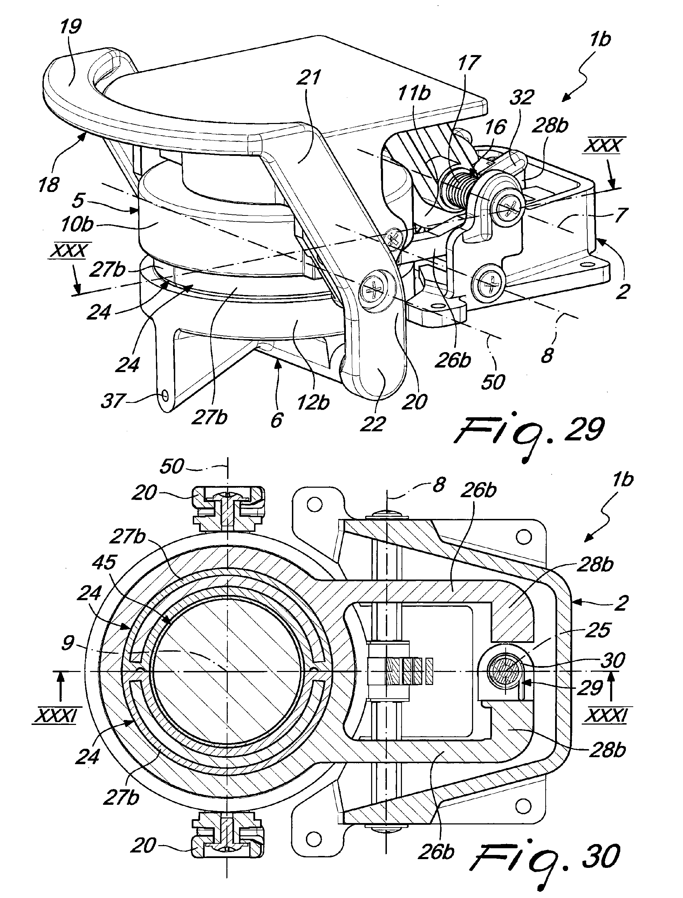

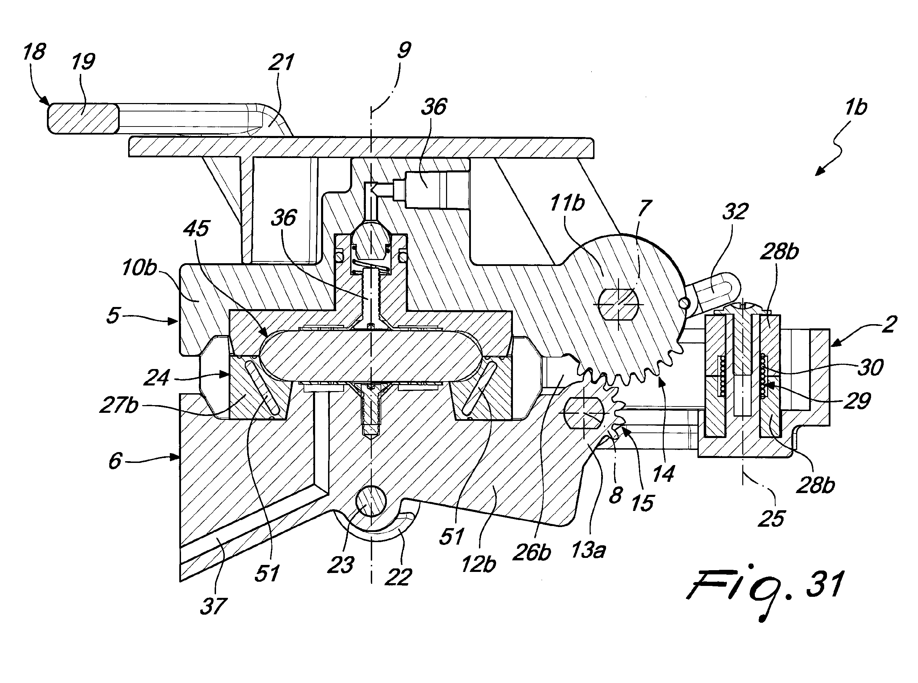

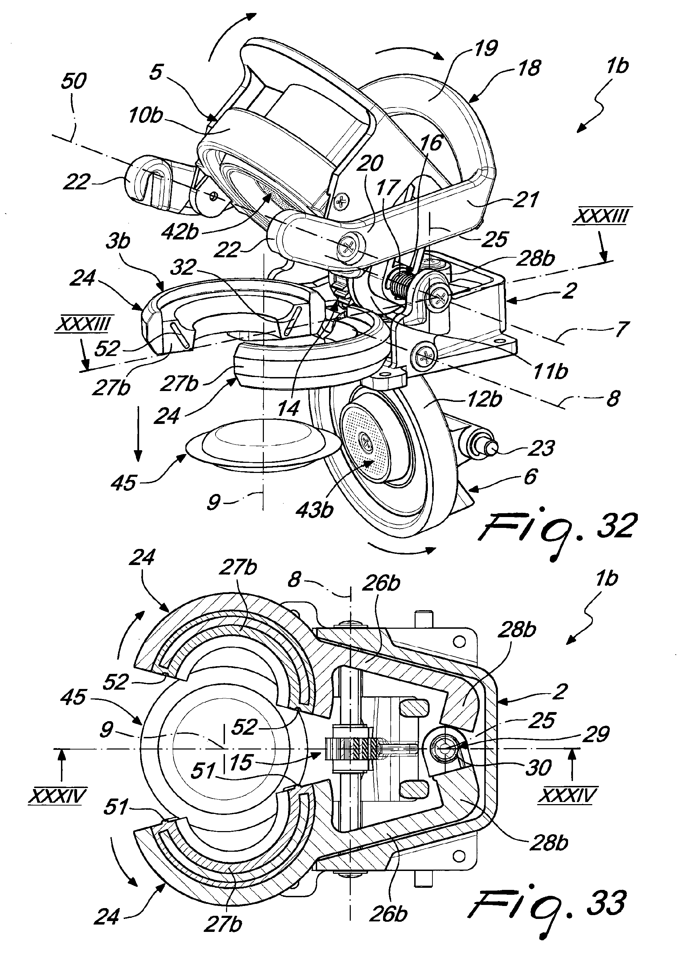

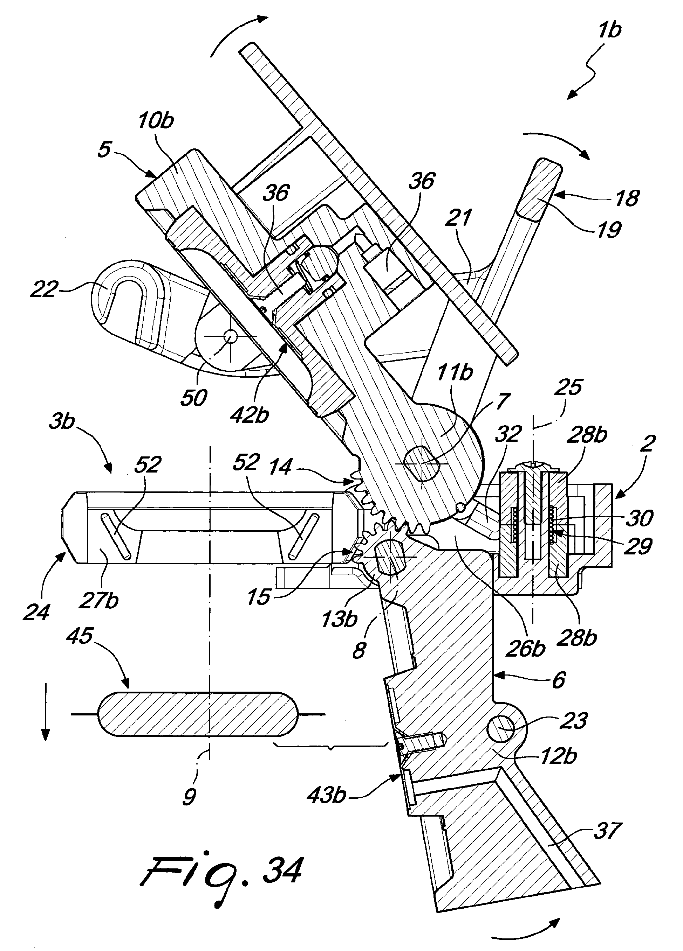

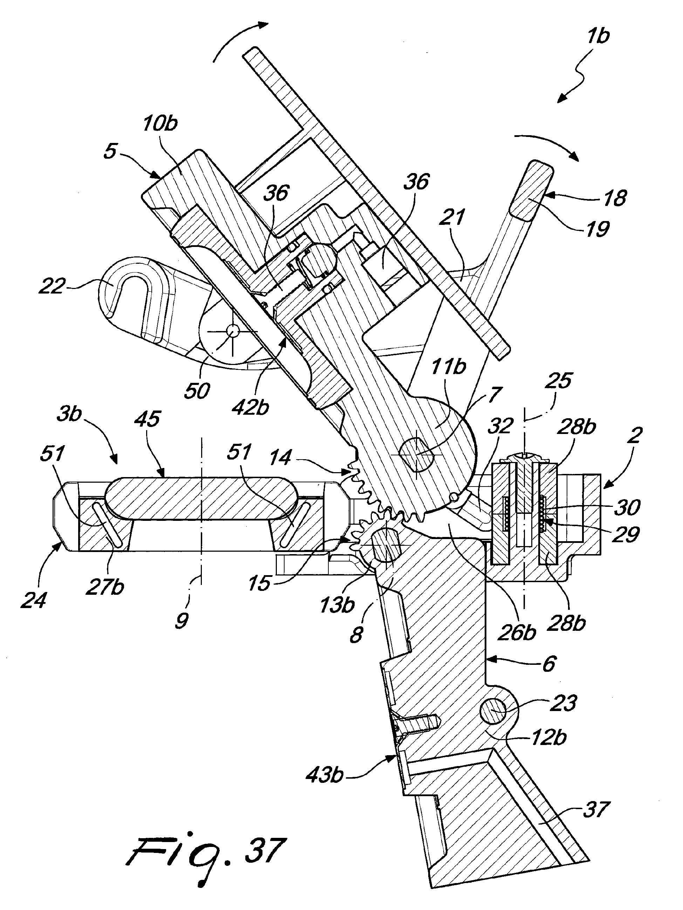

In a second embodiment, shown in Figures 29 to 37, the infusion assembly, generally designated by the reference numeral 1b, instead of operating with a capsule 4 operates with a pod 45.

In this second embodiment, the infusion assembly 1b has substantially the same components as the infusion assembly 1a of the first embodiment.

Because of what has been said above, therefore, the components shared by the two proposed embodiments are designated by the same reference numerals.

Likewise, the components that are similar but not completely equivalent or in any case have a different shape will be designated by the same reference numeral as the ones designated in the first embodiment but with the replacement of the accompanying letter of the reference numeral "a" with the letter "b".

In particular, the infusion chamber 3a of the infusion assembly 1b, by having to accommodate a pod 45 that has a substantially disc-like shape, likewise has a disc-like shape, with a consequent geometric variation of the substantially C-shaped portions 27b of the jaw elements 24.

Moreover, since the pod 45 is made of a water-permeable material, no perforation thereof is required. This means that the perforated plates 42a and 43b have no perforating spikes.

If the pod 45 is made of a material that is not permeable to water, such as for example aluminum, the perforated plates 42a and 43b can be provided with perforating spikes.

Moreover, in order to able to use the infusion assembly 1b also with a pod 45 having a different shape, means, not shown, for adapting the infusion chamber 3b in relation to the pod 45 can be provided.

Operation of the infusion assemblies 1a and 1b in the two proposed embodiments is as follows.

Starting from the closed position, shown in the two proposed embodiments respectively in Figures 1 and 29, by holding the handle 18 and making it rotate about its pivoting axis 50 with respect to the upper element 5 it is possible to disengage the end portions 22 of the arms 21 from the respective retention pins 23 defined by the lower element 6, disengaging the lower element 6 from the upper element 5.

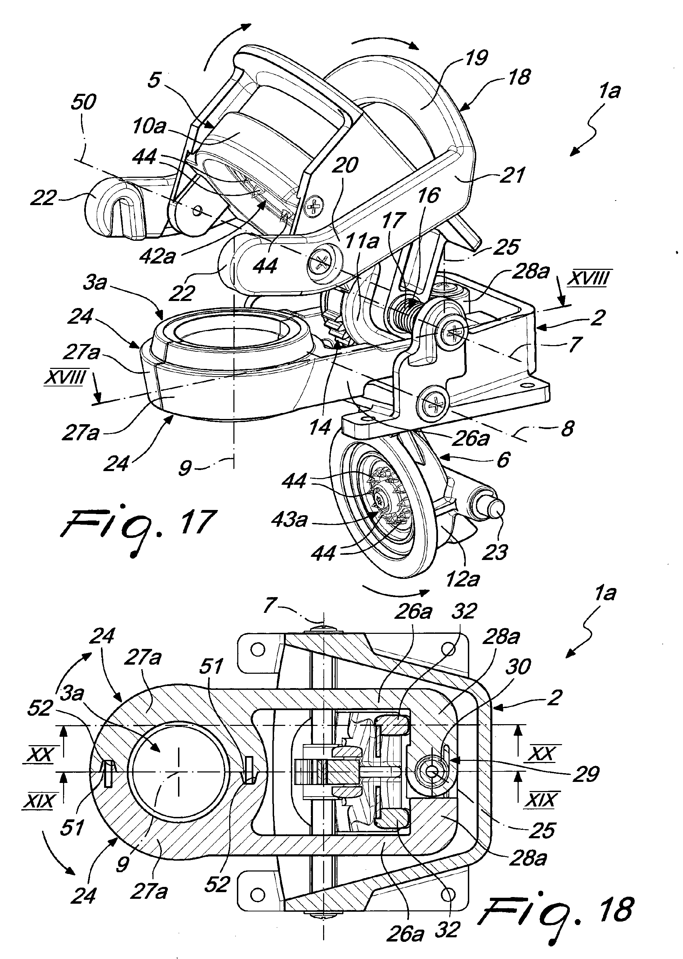

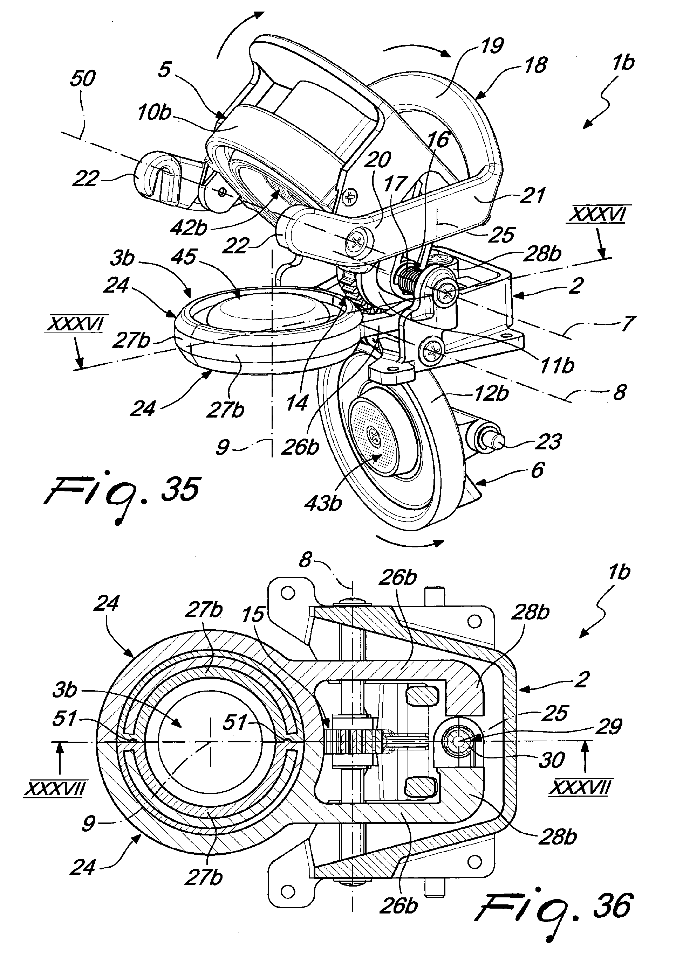

Due to the spring 17 and the toothed profiles 14 and 15, the upper element 5 and the lower element 6 rotate with respect to the main body 2 about the two pivoting axes 7 and 8 until they reach the configuration shown in Figures 17 and 35.

During the transition, which can occur in a completely automatic manner, if the torsion spring 17 is capable of generating an elastic reaction that is strong enough to allow the cam elements 32 to pass beyond the step 33 at the end of the inclined planes 31, or with the manual aid of the user, due to the engagement of the cam elements 32 with the inclined planes 31, the jaw elements 24 open, allowing the capsule 4 or the pod 45 to fall by gravity, and subsequently close automatically due to the action of the caliper spring 30.

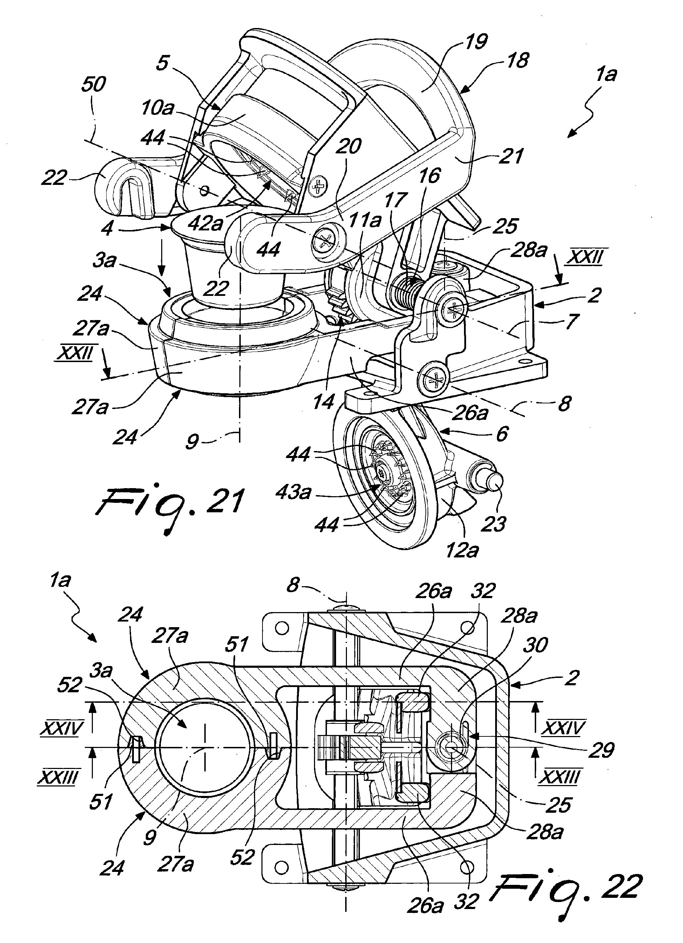

Due to the torsion spring 17, the upper element 5 and the lower element 6 remain in their open position so as to allow the user to insert a new capsule 4 or a new pod 45, as shown in Figures 21 and 35.

Once the new capsule 4 or the new pod 45 has been inserted, always by gripping the handle 18, the user closes again the upper element 5 and the lower element 6, returning them to the closed position of Figures 1 and Figure 29.

In this last transition, the cam elements 32, which are initially accommodated in the cavities 34, are able to move beyond the step 33 by means of the elastically flexible support 35.

In practice it has been found that the infusion assembly, particularly for capsules and/or pods for obtaining infused beverages and the like, according to the present invention, fully achieves the intended aim and objects because by changing in each instance the adapter means it can be used with any type of commercially available capsule, ensuring a correct seal of the infusion chamber.

The infusion assembly, particularly for capsules and/or pods for obtaining infused beverages and the like, thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2011A000876 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An infusion assembly (1a, 1b) for capsules and/or pods for obtaining infused beverages and the like, comprising a main body (2) associable with a coffee machine or the like and supporting at least one element (5, 6, 24) adapted to define an infusion chamber (3a, 3b) adapted to accommodate a capsule (4) or pod (45) for infusions, and adapter means (38) for said capsule (4) or pod (45) in said infusion chamber (3a, 3b), said adapter means (38) comprising a body (39) insertable by form-fit engagement in a seat defined by said at least one element (24), said body (39) being of the hollow through type to define said infusion chamber (3a, 3b), **characterized in that** it further comprises a plurality of grooves (40) which are defined on the inner surface of said body (39) and are adapted to mutually match up with ribs (41) defined on the outer surface of said capsule (4) or pod (45), for the correct placement of said capsule (4) or pod (45) in said infusion chamber (3a, 3b).

## Patentansprüche

1. Ein Aufgussaufbau (1a, 1b) für Kapseln und/oder Pads zum Herstellen aufgegossener Getränke und dergleichen, der einen Hauptkörper (2) umfasst, der mit einer Kaffeemaschine oder Ähnlichem verbunden werden kann und mindestens ein Element (5, 6, 24) trägt, das ausgebildet ist, um eine Aufgusskammer (3a, 3b) zu bestimmen, ausgebildet, um eine Kapsel (4) oder ein Pad (45) für Aufgüsse aufzunehmen, und Adaptermittel (38) für die Kapsel (4) oder das Pad (45) in der Aufgusskammer (3a, 3b), wobei die Adaptermittel (38) einen Körper (39) umfassen, der durch formschlüssigen Eingriff in einen Sitz eingesetzt werden kann, der von dem mindestens einen Element (24) bestimmt wird, wobei der Körper (39) von der vollständig hohlen Art ist, um die Aufgusskammer (3a, 3b) zu bestimmen, **dadurch gekennzeichnet, dass** er weiter eine Vielzahl von Nuten (40) umfasst, die an der Innenfläche des Körpers (39) bestimmt und ausgebildet sind, um mit Rippen (41) zusammenzupassen, die an der Außenfläche der Kapsel (4) oder des Pads (45) bestimmt sind, zur korrekten Platzierung der Kapsel (4) oder des Pads (45) in die Aufgusskammer (3a, 3b).

## Revendications

1. Dispositif d'infusion (1a, 1b) pour capsules et/ou dosettes pour obtenir des boissons infusées et similaires, comprenant un corps principal (2) pouvant être associé à une machine à café ou similaire et supportant au moins un élément (5, 6, 24) adapté à définir une chambre d'infusion (3a, 3b) adaptée à loger une capsule (4) ou dosette (45) pour infusions, ainsi que des moyens d'adaptation (38) pour ladite capsule (4) ou dosette (45) dans ladite chambre d'infusion (3a, 3b), ledit moyen d'adaptation (38) comprenant un corps (39) pouvant être inséré, de façon à entrer en prise par complémentarité des formes, dans un siège défini par ledit au moins un élément (24), ledit corps (39) étant de type traversant creux pour définir ladite chambre d'infusion (3a, 3b), **caractérisé en ce qu'**il comprend, en outre, une pluralité de rainures (40) qui sont définies sur la surface intérieure dudit corps (39) et adaptées à correspondre à des nervures (41) définies sur la surface extérieure de ladite capsule (4) ou dosette (45) pour la disposition correcte de ladite capsule (4) ou dosette (45) dans ladite chambre d'infusion (3a, 3b).
